# EUROPÄISCHE PATENTSCHRIFT

(11) **EP 1 317 612 B1**
(45) Veröffentlichungstag und Bekanntmachung des Hinweises auf die Patenterteilung: **03.11.2004**
(21) Anmeldenummer: 01960137.6
(22) Anmeldetag: 02.08.2001
(51) Int. Cl.: F02D 37/02, F02D 41/40, F02P 5/152, F02D 21/08

(54) **VERFAHREN ZUM BETREIBEN EINER BRENNKRAFTMASCHINE UND ENTSPRECHENDE VORRICHTUNG**
METHOD FOR OPERATING AN INTERNAL COMBUSTION ENGINE, AND A CORRESPONDING DEVICE
PROCEDE POUR ACTIONNER UN MOTEUR A COMBUSTION INTERNE ET DISPOSITIF APPROPRIE

(30) Priorität: 04.09.2000 DE 10043700
(43) Veröffentlichungstag der Anmeldung: 11.06.2003
(73) Patentinhaber: ROBERT BOSCH GMBH, 70442 Stuttgart (DE)
(72) Erfinder: SAULER, Juergen, 70192 Stuttgart (DE); HEINSTEIN, Axel, 71299 Wimsheim (DE)
(86) Internationale Anmeldenummer: PCT/DE2001/002940
(87) Internationale Veröffentlichungsnummer: WO 2002/020963

(56) Entgegenhaltungen:
- EP-A- 1 075 593
- WO-A-00/52317
- DE-A- 19 908 729
- US-A- 4 846 130
- US-A- 6 041 756

## Beschreibung

### Stand der Technik

Die Erfindung geht aus von einem Verfahren zum Betreiben einer Brennkraftmaschine und einer entsprechenden Vorrichtung nach Gattung der unabhängigen Ansprüche. Es ist bereits ein Verfahren zum Betreiben einer Brennkraftmaschine und eine entsprechende Vorrichtung mit mindestens einem Zylinder bekannt, wobei aufgrund der Anwendung einer Klopfregelung der Zündwinkel in dem mindestens einen Zylinder um einen Verstellwinkel vom drehzahl- und/oder lastabhängigen Grundzündwinkel verschoben ist. Dabei ist der Verstellwinkel abhängig von der Klopfhäufigkeit in dem mindestens einen Zylinder und er ist umso größer, je häufiger das Klopfsignal in den vorangegangenen Arbeitsspielen aufgetreten ist.

US-A- 6 041 756 (BONNE) spiegelt des nächstliegende Stand der Technik wieder.

### Vorteile der Erfindung

Das erfindungsgemäße Verfahren und die erfindungsgemäße Vorrichtung mit den Merkmalen der unabhängigen Ansprüche haben demgegenüber den Vorteil, dass die durch die Spätverstellung des Zündwinkels aufgrund des Klopfens verursachte Reduzierung des Drehmoments verringert werden kann. Somit ist es möglich, den Zündwinkel wieder nach Früh zu verschieben und somit ein größeres Drehmoment zu erzeugen und dadurch die Leistung der Brennkraftmaschine zu erhöhen. Es lässt sich demnach ein besserer Wirkungsgrad erzielen.

Durch die in den Unteransprüchen aufgeführten Maßnahmen sind vorteilhafte Weiterbildungen und Verbesserungen des in den unabhängigen Ansprüchen angegebenen Verfahrens bzw. der Vorrichtung möglich. Eine besonders einfache Maßnahme bei einer benzindirekteinspritzenden Brennkraftmaschine, den Zündwinkel nach früh zu ziehen, ist die Durchführung eines Doppeleinspritzens in einem Arbeitsspiel eines Zylinders. Dabei wird durch eine erste Einspritzung zuerst ein mageres Grundgemisch im jeweiligen Zylinder gebildet, in das dann ein zweites Mal eingespritzt wird. Durch das magere Grundgemisch, das in Randzonen des Gemischs auch nach der zweiten Einspritzung noch vorhanden ist, wird die Klopfneigung verringert. Desweiteren wird durch den durch die zweite Einspritzung dem Brennraum zugeführten Kraftstoff das Kraftstoff-/Luftgemisch gekühlt, was zu einer weiteren Reduzierung der Klopfneigung führt. Besonders vorteilhaft ist weiterhin, bei der Verwendung einer Doppeleinspritzung die Menge des einzuspritzenden Kraftstoffs gegenüber einer einfachen Einspritzung nicht zu verändern, so dass bezogen auf die erreichbare Leistung weniger Kraftstoff verbraucht wird. Ebenfalls einfach realisieren läßt sich als zusätzliche Maßnahme die Veränderung der Rate des zurückgeführten Abgases, wenn in der Brennkraftmaschine eine Abgasrückführung zum Einsatz kommt. Dabei wird bei einer höheren Rate der Abgasrückführung ebenfalls die Klopfneigung durch eine Verringerung des Sauerstoffgehalts im Kraftstoff-/Luftgemisch reduziert.

Weiterhin vorteilhaft ist, als repräsentativen Verstellwinkel den Mittelwert aller zylinderindividuellen Spätverstellwinkel der Zylinder heranzuziehen, da so eine fehlerbedingte Umschaltung verhindert wird. Es ist andererseits jedoch auch vorteilhaft, als Verstellwinkel den zylinderindividuellen Spätverstellwinkel heranzuziehen und entsprechend die Aktivierung der Betriebsart Klopfschutz zylinderindividuell durchzuführen, da so sehr genau auf die zylinderindividuellen Eigenschaften reagiert werden kann.

Es ist weiterhin vorteilhaft, die Betriebsart Klopfschutz mit Doppeleinspritzung nur oberhalb einer vorgebbaren ersten Lastschwelle durchzuführen, da nur in einem bestimmten Lastbereich die Anwendung der Betriebsart Klopfschutz mit Doppeleinspritzung sinnvoll ist. Bei einer Zurückschaltung in eine andere Betriebsart, bei Unterschreiten eines bestimmten Lastschwellwerts ist es sinnvoll, diesen zweiten Lastschwellwert so zu wählen, dass er unterhalb des ersten Lastschwellwerts liegt, da so ein instabiler Zustand und ein dauerndes Hin- und Herschalten zwischen zwei Betriebsarten verhindert wird. Da sowohl der erste Lastschwellwert als auch der zweite Lastschwellwert abhängig von der Drehzahl unterschiedlich sein kann, ist es sinnvoll, diese Drehzahlabhängigkeit zu berücksichtigen.

Für die Betriebsart Klopfschutz mit Abgasrückführung als zusätzliche, die Klopfneigung reduzierende Maßnahme ist es sinnvoll, diese nur unterhalb eines vorgebbaren, dritten Lastschwellwert zu ergreifen, da für höhere Lasten die Maßnahme Abgasrückführung keinen Momentengewinn bringt. Analog zur Betriebsart Klopfschutz mit Doppeleinspritzung sollen instabile Zustände zwischen zwei Betriebsarten vermieden werden, so dass vorteilhafterweise der vierte Lastschwellwert, bei dem eine Rückschaltung von der Betriebsart Klopfschutz mit Abgasrückführung in eine andere Betriebsart erfolgen soll, oberhalb des dritten Lastschwellwerts liegen sollte. Da sowohl der dritte Lastschwellwert als auch der vierte Lastschwellwert abhängig von der Drehzahl unterschiedlich sein kann, ist es sinnvoll, diese Drehzahlabhängigkeit analog zur Betriebsart Klopfschutz mit Doppeleinspritzung zu berücksichtigen.

Es ist weiterhin vorteilhaft, bei der Aktivierung der Betriebsart Klopfschutz dem Grundzündwinkel auch ein anderes, für diese Betriebsart spezifisches last- und/oder drehzahlabhängiges Kennfeld zugrunde zu legen, da die Verhältnisse im Brennraum und somit die Entzündbarkeit des Kraftstoff-/Luftgemischs durch die Zusatzmaßnahme stark geändert wurden.

### Beschreibung der Ausführungsbeispiele

Klopfen, d.h. ein anormaler Verbrennungsvorgang im Brennraum einer Brennkraftmaschine, begrenzt die Leistung und den Wirkungsgrad und führt durch die hohen Flammgeschwindigkeiten zu Schädigungen des Brennraums. Um dies zu verhindern, werden in modernen Brennkraftmaschinen Systeme zur Klopferkennung und Klopfregelung integriert. Derartige Systeme sind aus der Literatur hinreichend bekannt, ihre Funktionsweise soll deshalb im Folgenden lediglich kurz zusammengefasst werden.

Mittels der zur Klopferkennung gehörenden Klopfsensoren werden Signale aus dem Brennraum erfasst, die an eine ebenfalls zur Klopferkennung gehörende Auswerteeinheit weitergegeben werden. Derartige Signale können beispielsweise akustische Signale, elektromagnetische Signale, elektrische Signale, Drucksignale oder Temperatursignale sein, die innerhalb oder außerhalb des Brennraums durch die Klopfsensoren aufgenommen werden. Die Auswerteeinheit nimmt eine Verstärkung der Signale vor und integriert die Signale in geeigneter Weise, so dass in einem in der Brennkraftmaschine enthaltenen Mikroprozessor nach einer Analog-/Digitalwandlung der Signale der integrierte Wert mit einem Schwellwert verglichen werden kann, wobei bei Überschreitung des Schwellwerts ein Klopfen erkannt wird. In der Auswerteeinheit kann weiterhin zur Unterdrückung von Störsignalen beispielsweise eine Auswahl eines bestimmten Frequenzbandes bzw. eine Auswahl bezüglich eines bestimmten Zeitfensters erfolgen, wobei das Frequenzband bzw. das Zeitfenster charakteristisch für das Auftreten von Klopfsignalen ist.

Wurde ein Klopfen erkannt, dann wird von dem in der Brennkraftmaschine integrierten Mikroprozessor die Klopfregelung dahingehend vorgenommen, dass zu einem Grundzündwinkel ein Verstellwinkel addiert wird, wobei die Summe den Basiszündwinkel bildet. Von der Momentenstruktur wird aufgrund der Momentenanforderungen ein momentenbasierter Zündwinkel berechnet, der den frühest möglichen Zündwinkel darstellt. Der Basiszündwinkel und der momentenbasierte Zündwinkel werden in dem Verfahren zur Berechnung des Zündwinkels anschließend miteinander verglichen, wobei als zu realisierender Zündwinkel der spätere der beiden Zündwinkel, d.h. der näher am Oberen Totpunkt liegende Zündwinkel, dient. Bei einer starken Klopfneigung des Kraftstoff-/Luftgemischs im Brennraum wird der Verstellwinkel große Werte annehmen, wobei der Verstellwinkel im Rahmen dieser Anmeldung als positiver Wert definiert wird, so dass der Zündwinkel stark nach spät verschoben wird, d.h. dass zu einem Zeitpunkt näher am oberen Totpunkt gezündet wird. Der Grundzündwinkel wird dabei aus einem last- und/oder drehzahlabhängigen Kennfeld gelesen, das Zündwinkel bei Normbedingungen enthält und im Mikroprozessor der Brennkraftmaschine gespeichert ist. Es enthält Werte für den Grundzündwinkel, die bestimmten Bereichen der Drehzahl und/oder der Last zugeordnet sind. Die Drehzahl wird dabei von Sensoren ermittelt, die vorzugsweise an der Kurbelwelle angebracht sind. Die Last, d.h. die relative Luftfüllung des jeweiligen Zylinders, wird durch den Mikroprozessor aufgrund verschiedener Betriebsparameter wie Drehzahl, Momentenanforderung sowie aufgrund der Messwerte des Heißfilm-Luftmassenmessers (HFM) und des Saugrohrdrucksensors, der Rate des rückgeführten Abgases oder der Stellung der Drosselklappe mit Hilfe von Modellen ermittelt und für die Ermittlung des Grundzündwinkels bereitgestellt. Die relative Luftfüllung ist definiert als das Verhältnis aus der aktuellen Luftfüllung und der Luftfüllung unter Normbedingungen für den jeweiligen Zylinder. Die Verstellung des Zündwinkels durch die Klopfregelung erfolgt solange, bis kein Klopfen mehr auftritt. Die Verstellung des Zündwinkels in den einzelnen Schritten addiert sich zu einem Verstellwinkel, der die Gesamtverstellung des Zündwinkels bezogen auf den Grundzündwinkel angibt. Tritt über einen bestimmten Zeitraum kein Klopfen mehr auf, dann wird durch die Klopfregelung der Zündwinkel wieder nach früh verstellt, d.h. der Zündwinkel befindet sich bei Kurbelwellenwinkeln, die weiter vor dem oberen Totpunkt liegen. Entsprechend verkleinert sich aufgrund der Frühverstellung des Zündwinkels der Verstellwinkel. Nachteilig bei dem herkömmlichen Verfahren der Klopfregelung ist, dass bei sehr großer Spätverstellung des Zündwinkels das erreichbare Drehmoment und damit der Wirkungsgrad stark verringert wird.

Das erfindungsgemäße Verfahren zum Betreiben einer Brennkraftmaschine zeichnet sich demgegenüber durch eine neue Betriebsart aus, die sowohl bei einer benzindirekteinspritzenden Brennkraftmaschine als auch bei einer Brennkraftmaschine mit Saugrohreinspritzung ausgeführt werden kann. Das Verfahren wird durch einen in der Brennkraftmaschine befindlichen Mikroprozessor durchgeführt. Ist der Verstellwinkel der Klopfregelung größer als ein bestimmter, vorgebbarer Schwellwert, dann wird durch den Mikroprozessor eine Betriebsart Klopfschutz aktiviert, die beinhaltet, dass eine die Klopfneigung reduzierende Maßnahme durchgeführt wird und entsprechend der Verstellwinkel so verändert wird, dass der Basiszündwinkel nach Früh gezogen wird. Dadurch kann ein Momentengewinn und somit eine Erhöhung des Wirkungsgrads erreicht werden.

In einem ersten Ausführungsbeispiel der Erfindung werden als die die Klopfneigung reduzierende Maßnahme in einer benzindirekteinspritzenden Brennkraftmaschine in einem Arbeitszyklus eines Zylinders zwei Einspritzvorgänge durchgeführt. Die Durchführung von zwei Einspritzvorgängen in einem Arbeitszyklus wird auch als Doppeleinspritzung bezeichnet. Ein Arbeitszyklus umfasst dabei den Zyklus der 4 Takte eines Motors mit Viertaktverfahren: den Ansaugtakt, den Verdichtungstakt, den Arbeitstakt und den Ausstoßtakt bzw. die 2 Takte eines Motors mit Zweitaktverfahren: den Spül- und Verdichtungstakt sowie den Arbeitstakt. Die Änderung des Verstellwinkels wird in diesem Ausführungsbeispiel derart vorgenommen, dass der Verstellwinkel verkleinert wird, was bedeutet, dass der Basiszündwinkel nach früh verstellt wird. Das zweimalige Einspritzen des Kraftstoffs in den Brennraum in einem Arbeitsspiel wird dabei derart durchgeführt, dass während des Ansaugtakts bzw. des Spül- und Verdichtungstakts durch eine erste Einspritzung ein homogenes, mageres Grundgemisch erzeugt wird. In dieses homogene Grundgemisch wird kurz vor der Zündung, d.h. im Kompressionstakt bzw. ebenfalls im Spül- und Verdichtungstakt, durch eine zweite Einspritzung eine fette Wolke um die Zündkerze herum platziert. Diese Schichtung gewährleistet eine sichere Entflammung des Kraftstoff-/Luftgemischs im Brennraum, während gleichzeitig durch die mageren Randzonen die Klopfneigung reduziert wird. Eine Reduzierung der Klopfneigung.wird auch dadurch erreicht, dass durch die zweite Einspritzung von Kraftstoff der Brennraum gekühlt wird. Dabei wird die Kraftstoffmenge insgesamt nicht gegenüber einer einfachen Einspritzung erhöht, sondern es wird die Kraftstoffmenge auf beide Einspritzvorgänge aufgeteilt. Aufgrund des höheren erreichbaren Drehmoments durch den früheren Zündwinkel kann somit bei gleichem Kraftstoffverbrauch ein höherer Wirkungsgrad erzielt werden, wodurch bezogen auf die Leistung der Verbrauch der Brennkraftmaschine reduziert wird.

In einem weiteren bevorzugten Ausführungsbeispiel umfasst die die Klopfneigung verringernde Maßnahme eine Erhöhung der Rate des rückgeführten Abgases, wenn eine Abgasrückführung in das System der Brennkraftmaschine integriert ist. Diese Maßnahme kann sowohl in einer benzindirekteinspritzenden Brennkraftmaschine als auch in einer Brennkraftmaschine mit Saugrohreinspritzung durchgeführt werden. Eine Abgasrückführung schließt dabei sowohl eine interne als auch eine externe Abgasrückführung ein, wobei als interne Abgasrückführung der Vorgang bezeichnet wird, bei dem im Zylinder das Abgas nicht vollständig ausgestoßen wird, sondern Abgas im Zylinder verbleibt, das im nächsten Arbeitszyklus wieder Bestandteil des Kraftstoff-/Luftgemischs im Zylinder ist. Die externe Abgasrückführung umfasst die Rückführung von Abgas aus dem Abgastrakt in das Saugrohr der Brennkraftmaschine. Die Rate des extern rückgeführten Abgases wird dabei über das Abgasrückführventil beeinflusst, welches wiederum durch den Mikroprozessor gesteuert wird. Die Rate des intern rückgeführten Abgases kann durch die Nockenwellenstellung beeinflusst werden. Bei einer Erhöhung der Rate des rückgeführten Abgases wird der Sauerstoffgehalt des im Zylinder befindlichen Kraftstoff-/Luftgemischs verringert, so dass die Entstehung anormaler Verbrennungsvorgänge im Brennraum erschwert wird.

In einem weiteren bevorzugten Ausführungsbeispiel wird der Grundzündwinkel einem anderen, für die Betriebsart Klopfschutz spezifischen Kennfeld, das ebenfalls im Mikroprozessor gespeichert ist, entnommen. Dabei ist das spezifische Kennfeld je nach ergriffener, die Klopfneigung reduzierender Maßnahme, unterschiedlich. Mit dem veränderten Kennfeld für die Betriebsart Klopfschutz wird den veränderten Bedingungen für die Entzündung des Kraftstoff-/Luftgemischs im Brennraum durch die Doppeleinspritzung oder durch die veränderte Rate des rückgeführten Abgases Rechnung getragen. Während der Betriebsart Klopfschutz wird in diesem bevorzugten Ausführungsbeispiel weiterhin die Klopfregelung und die Klopferkennung durchgeführt. Das bedeutet, dass der durch den Übergang in die Betriebsart Klopfschutz veränderte Verstellwinkel weiterhin entsprechend dem Auftreten von Klopfereignissen angepasst wird. Dabei wird in einem weiteren bevorzugten Ausführungsbeispiel beim Übergang in die Betriebsart Klopfschutz die sogenannte schnelle Frühverstellung für den Zündwinkel aktiviert, bei der der Verstellwinkel entweder mit größerer Schrittweite oder mit einer höheren Frequenz gegenüber der sonst durchgeführten Frühverstellung verkleinert wird. Der Verstellwinkel wird dabei solange verkleinert, bis ein Klopfen erkannt wird, was wiederum zu einer Spätverstellung des Zündwinkels führt.

In einem weiteren bevorzugten Ausführungsbeispiel wird die Betriebsart Klopfschutz mit Doppeleinspritzung erst dann aktiviert, wenn der jeweils aktuelle Lastwert einen bestimmten, vorgebbaren ersten Lastschwellwert überschritten hat. In einem weiteren bevorzugten Ausführungsbeispiel ist dabei dieser erste Lastschwellwert zusätzlich abhängig von der Drehzahl, wobei der erste Lastschwellwert aus einer Kennlinie, die in dem Mikroprozessor der Brennkraftmaschine gespeichert ist, gelesen wird. In der Kennlinie des ersten Lastschwellwerts sind dabei Werte für den ersten Lastschwellwert einzelnen Bereichen der Drehzahl zugeordnet. Ein weiteres Ausführungsbeispiel der Erfindung betrifft das Verlassen der Betriebsart Klopfschutz mit Doppeleinspritzung. Wird ein zweiter Lastschwellwert unterschritten, dann nimmt der Mikroprozessor der Brennkraftmaschine eine Umschaltung in eine andere Betriebsart vor. Derartige Betriebsarten können beispielsweise die Betriebsarten Homogen, Homogen-Mager oder Schichtbetrieb sein. Diese Betriebsarten sind für die benzindirekteinspritzende Brennkraftmaschine hinreichend bekannt und sollen deswegen nicht nochmals beschrieben werden. Verschiedene Betriebsarten unterscheiden sich durch eine grundsätzlich andere Gestaltung wichtiger Betriebsgrößen und zugrunde liegender Modellvorstellungen. Wichtige Betriebsgrößen sind hierbei die Anzahl der Einspritzvorgänge in einem Arbeitszyklus, der Einspritzwinkel, die Einspritzdauer, die Menge des eingespritzten Kraftstoffs und damit das Luftverhältnis λ sowie der Zündwinkel. Als zugrunde liegende Modellvorstellungen wird beispielsweise das Momentenmodell betrachtet. Zu beachten ist für dieses Ausführungsbeispiel, dass der zweite Lastschwellwert unterhalb des ersten Lastschwellwerts liegt, so dass bezüglich des Lastschwellwerts für die Betriebsart Klopfschutz eine Hysterese durchfahren wird. Dadurch wird verhindert, dass die Brennkraftmaschine eine instabilen Zustand zwischen der Betriebsart Klopfschutz und einer anderen Betriebsart erreicht und ein dauerndes Hin- und Herschalten zwischen beiden Betriebsarten erfolgt. Der zweite Lastschwellwert kann dabei in einem ersten Ausführungsbeispiel derart ermittelt werden, dass eine bestimmte Lastschwellwertdifferenz von dem ersten Lastschwellwert subtrahiert wird. Vorzugsweise kann diese Lastschwellwertdifferenz drehzahlabhängig in dem Mikroprozessor der Brennkraftmaschine gespeichert sein. In einem zweiten Ausführungsbeispiel kann der zweite Lastschwellwert direkt aus einer Kennlinie, die drehzahlabhängig ist, analog zum ersten Schwellwert im Mikroprozessor der Brennkraftmaschine gelesen werden. Die Werte des zweiten Lastschwellwerts sind dabei in der Kennlinie derart abzulegen, dass sie kleiner als die Werte des ersten Lastschwellwerts sind.

In einem weiteren bevorzugten Ausführungsbeispiel wird die Betriebsart Klopfschutz mit Abgasrückführung erst dann aktiviert, wenn der jeweils aktuelle Lastwert einen bestimmten, vorgebbaren dritten Lastschwellwert unterschritten hat, da die Maßnahme Abgasrückführung in niedrigen Lastbereichen hauptsächlich eingesetzt wird. In einem weiteren bevorzugten Ausführungsbeispiel ist dabei dieser dritte Lastschwellwert zusätzlich abhängig von der Drehzahl, wobei der dritte Lastschwellwert aus einer Kennlinie, die in dem Mikroprozessor der Brennkraftmaschine gespeichert ist, gelesen wird. In der Kennlinie des dritten Lastschwellwerts sind dabei Werte für den dritten Lastschwellwert einzelnen Bereichen der Drehzahl zugeordnet. Ein weiteres Ausführungsbeispiel der Erfindung betrifft das Verlassen der Betriebsart Klopfschutz mit Abgasrückführung. Wird ein vierter Lastschwellwert überschritten, dann nimmt der Mikroprozessor der Brennkraftmaschine eine Umschaltung in eine andere Betriebsart vor. Derartige Betriebsarten können beispielsweise bei benzindirekteinspritzenden Brennkraftmaschinen die bereits erwähnten Betriebsarten Homogen, Homogen-Mager oder Schichtbetrieb sein sowie bei Brennkraftmaschinen mit Saugrohreinspritzung der Betrieb ohne Klopfschutz. Zu beachten ist für dieses Ausführungsbeispiel, dass der vierte Lastschwellwert oberhalb des dritten Lastschwellwerts liegt, so dass bezüglich des Lastschwellwerts für die Betriebsart Klopfschutz eine Hysterese durchfahren wird. Dadurch wird verhindert, dass die Brennkraftmaschine eine instabilen Zustand zwischen der Betriebsart Klopfschutz und einer anderen Betriebsart erreicht und ein dauerndes Hin- und Herschalten zwischen beiden Betriebsarten erfolgt. Der vierte Lastschwellwert kann dabei in einem ersten Ausführungsbeispiel derart ermittelt werden, dass eine bestimmte Lastschwellwertdifferenz von dem dritten Lastschwellwert subtrahiert wird. Vorzugsweise kann diese Lastschwellwertdifferenz drehzahlabhängig in dem Mikroprozessor der Brennkraftmaschine gespeichert sein. In einem zweiten Ausführungsbeispiel kann der vierte Lastschwellwert direkt aus einer Kennlinie, die drehzahlabhängig ist, analog zum dritten Schwellwert im Mikroprozessor der Brennkraftmaschine gelesen werden. Die Werte des vierten Lastschwellwerts sind dabei in der Kennlinie derart abzulegen, dass sie größer als die Werte des dritten Lastschwellwerts sind.

In einem weiteren Ausführungsbeispiel kann die Umschaltung in die Betriebsart Klopfschutz sowohl zylinderindividuell als auch für alle Zylinder der Brennkraftmaschine gleichzeitig erfolgen. Bei einer zylinderindividuellen Umschaltung in die Betriebsart Klopfschutz wird als Verstellwinkel der Verstellwinkel des jeweiligen Zylinders herangezogen. Wird eine Umschaltung in die Betriebsart Klopfschutz für alle Zylinder gleichzeitig vorgenommen, so ist es vorteilhaft, als Verstellwinkel für den Zündwinkel den Mittelwert der zylinderindividuellen Verstellwinkel für den Zündwinkel heranzuziehen. Vorzugsweise wird hierbei der arithmetische Mittelwert der zylinderindividuellen Verstellwinkel berechnet. Diese Berechnung wird wiederum durch den Mikroprozessor der Brennkraftmaschine durchgeführt.

Durch die Bereitstellung der Betriebsart Klopfschutz kann aufgrund einer Frühverstellung des Zündwinkels ein Momentengewinn und damit eine Wirkungsgraderhöhung erreicht werden. Die Betriebsart lässt sich für benzindirekteinspritzende Brennkraftmaschinen leicht realisieren, da lediglich der Verstellwinkel geändert werden muss und eine die Klopfneigung des Kraftstoff-/Luftgemischs reduzierende, zusätzliche Maßnahme angewendet werden muss.

## Patentansprüche

1. Verfahren zum Betreiben einer Brennkraftmaschine, bei dem in mindestens einem Zylinder eine Verbrennung eines in den Zylinder eingebrachten Kraftstoffs in einem Kraftstoff-/Luftgemisch stattfindet, wobei bei Auftreten von Klopfen mittels einer Klopfregelung ein Basiszündwinkel in dem mindestens einen Zylinder stufenweise zu einem Verstellwinkel vom Grundzündwinkel nach Spät verstellt wird, **dadurch gekennzeichnet, dass** dann, wenn der Verstellwinkel einen vorgebbaren Schwellwert überschreitet
a) mindestens eine die Klopfneigung des Kraftstoff-/Luftgemischs reduzierende Zusatzmaßnahme ergriffen wird und
b) der Verstellwinkel verringert wird, so dass der Basiszündwinkel nach Früh verstellt wird.

2. Verfahren nach Anspruch 1, **dadurch gekennzeichnet, dass** die die Klopfneigung reduzierende Zusatzmaßnahme für eine benzindirekteinspritzenden Brennkraftmaschine beinhaltet, dass in einem Arbeitszyklus zwei Kraftstoff-Einspritzvorgänge durchgeführt werden.

3. Verfahren nach Anspruch 2, **dadurch gekennzeichnet, dass** die Menge einzuspritzenden Kraftstoffs auf beide Einspritzvorgänge aufgeteilt wird.

4. Verfahren nach einem der Ansprüche 1 bis 3, **dadurch gekennzeichnet, dass** die die Klopfneigung reduzierende Zusatzmaßnahme beinhaltet, dass die Rate des zurückgeführten Abgases erhöht wird.

5. Verfahren nach einem der Ansprüche 2 bis 4, **dadurch gekennzeichnet, dass** bei Überschreiten des vorgebbaren Schwellwerts die Zusatzmaßnahme Doppeleinspritzung nur oberhalb eines vorgebbaren ersten Lastschwellwerts oder die Zusatzmaßnahme Abgasrückführung nur unterhalb eines dritten Lastschwellwerts durchgeführt wird.

6. Verfahren nach Anspruch 5, **dadurch gekennzeichnet, dass** nach Unterschreiten eines vorgebbaren zweiten Lastschwellwerts für die Zusatzmaßnahme Doppeleinspritung oder nach Überschreiten eines vorgebbaren vierten Lastschwellwerts für die Zusatzmaßnahme Abgasrückführung die Brennkraftmaschine weiter mit einer anderen Betriebsart betrieben wird, wobei der zweite Lastschwellwert kleiner ist als der erste Lastschwellwert und der vierte Lastschwellwert größer ist als der dritte Lastschwellwert.

7. Verfahren nach einem der Ansprüche 5 oder 6, **dadurch gekennzeichnet, dass** der erste Lastschwellwert und/oder der zweite Lastschwellwert und/oder der dritte Lastschwellwert und/oder der vierte Lastschwellwert von der Drehzahl abhängig sind.

8. Verfahren nach einem der Ansprüche 1 bis 7, **dadurch gekennzeichnet, dass** bei Überschreiten des vorgebbaren Schwellwerts der Verstellwinkel schnell verkleinert wird, wobei die schnellere Verkleinerung durch eine größere Schrittweite und/oder durch eine höhere Frequenz der Verkleinerungsschritte erfolgt.

9. Verfahren nach einem der Ansprüche 1 bis 8, **dadurch gekennzeichnet, dass** als Verstellwinkel der Mittelwert der zylinderindividuellen Spätverstellwinkel aller Zylinder herangezogen wird.

10. Verfahren nach Anspruch 9, **dadurch gekennzeichnet, dass** der Schwellwert für alle Zylinder mit dem gleichen Wert vorgegeben wird.

11. Verfahren nach einem der Ansprüche 1 bis 8, **dadurch gekennzeichnet, dass** als Verstellwinkel der Verstellwinkel des jeweils aktuellen Zylinders herangezogen wird.

12. Verfahren nach Anspruch 11, **dadurch gekennzeichnet, dass** der Schwellwert zylinderindividuell vorgegeben wird.

13. Verfahren nach einem der Ansprüche 1 bis 12, **dadurch gekennzeichnet, dass** der Grundzündwinkel aus einem last- und/oder drehzahlabhängigen Kennfeld gelesen wird und bei Überschreitung des vorgebbaren Schwellwerts der Grundzündwinkel aus einem sich von den übrigen Betriebsarten unterscheidenden last- und/oder drehzahlabhängigen Kennfeld gelesen wird.

14. Vorrichtung zum Betreiben einer Brennkraftmaschine mit mindestens einem Zylinder, in dem eine Verbrennung des in den mindestens einen Zylinder eingebrachten Kraftstoffs in einem Kraftstoff-/Luftgemisch stattfindet, wobei ein Mikroprozessor vorgesehen ist, der eine Klopfregelung beinhaltet, so dass bei einem Auftreten von Klopfen ein Basiszündwinkel in dem mindestens einen Zylinder stufenweise zu einem Verstellwinkel vom Grundzündwinkel nach Spät verstellbar ist, **dadurch gekennzeichnet, dass**, wenn der Verstellwinkel einen vorgebbaren Schwellwert überschreitet, in dem Mikroprozessor Mittel vorgesehen sind, so dass
a) eine die Klopfneigung des Kraftstoff-/Luftgemischs reduzierende Zusatzmaßnahme ergreifbar ist und
b) der Verstellwinkel verkleinerbar ist, so dass der Basiszündwinkel nach Früh verstellbar ist.

15. Vorrichtung nach Anspruch 14, **dadurch gekennzeichnet, dass** für eine benzindirekteinspritzende Brennkraftmaschine Mittel vorgesehen sind, so dass als die Klopfneigung reduzierende Zusatzmaßnahme in einem Arbeitszyklus zwei Kraftstoff-Einspritzvorgänge durchführbar sind.

16. Vorrichtung nach Anspruch 15, **dadurch gekennzeichnet, dass** im Mikroprozessor Mittel vorgesehen sind, so dass die Menge des einzuspritzenden Kraftstoffs auf die beiden Einspritzvorgänge aufteilbar ist.

17. Vorrichtung nach einem der Ansprüche 14 bis 16, **dadurch gekennzeichnet, dass** Mittel vorgesehen sind, so dass als die Klopfneigung reduzierende Zusatzmaßnahme die Rate des zurückgeführten Abgases vergrößerbar ist.

18. Vorrichtung nach einem der Ansprüche 15 bis 17, **dadurch gekennzeichnet, dass** im Mikroprozessor Mittel vorgesehen sind, so dass bei Überschreitung des vorgebbaren Schwellwerts die Zusatzmaßnahme Doppeleinspritzung nur oberhalb eines vorgebbaren ersten Lastschwellwerts und/oder bei Überschreitung des vorgebbaren Schwellwerts die Zusatzmaßnahme Klopfschutz mit Abgasrückführung nur unterhalb eines vorgebbaren dritten Lastschwellwerts durchführbar ist.

19. Vorrichtung nach Anspruch 18, **dadurch gekennzeichnet, dass** im Mikroprozessor Mittel vorgesehen sind, so dass nach Unterschreiten eines vorgebbaren zweiten Lastschwellwerts für die Zusatzmaßnahme Doppeleinspritzung und/oder nach Überschreiten eines vorgebbaren vierten Lastschwellwerts für die Zusatzmaßnahme Abgasrückführung die Brennkraftmaschine weiter mit einer anderen Betriebsart betreibbar ist, wobei der zweite Lastschwellwert kleiner ist als der erste Lastschwellwert und der vierte Lastschwellwert größer ist als der dritte Lastschwellwert.

20. Vorrichtung nach einem der Ansprüche 18 oder 19, **dadurch gekennzeichnet, dass** der erste Lastschwellwert und/oder der zweite Lastschwellwert und/oder der dritte Lastschwellwert und/oder der vierte Lastschwellwert von der Drehzahl abhängig sind.

21. Vorrichtung nach einem der Ansprüche 14 bis 20, **dadurch gekennzeichnet, dass** Mittel vorgesehen sind, so dass bei Überschreiten des vorgebbaren Schwellwerts der Verstellwinkel schnell verkleinerbar ist, wobei die schnellere Verkleinerung durch eine größere Schrittweite und/oder durch eine höhere Frequenz der Verkleinerungsschritte realisierbar ist.

22. Vorrichtung nach einem der Ansprüche 14 bis 21, **dadurch gekennzeichnet, dass** im Mikroprozessor Mittel vorgesehen sind, so dass als Verstellwinkel der Mittelwert der zylinderindividuellen Spätverstellungen aller Zylinder heranziehbar ist.

23. Vorrichtung.nach Anspruch 22, **dadurch gekennzeichnet, dass** der Schwellwert für alle Zylinder mit dem gleichen Wert vorgebbar ist.

24. Vorrichtung nach einem der Ansprüche 14 bis 21, **dadurch gekennzeichnet, dass** im Mikroprozessor Mittel vorgesehen sind, dass als Verstellwinkel der Verstellwinkel des jeweils aktuellen Zylinders heranziehbar ist.

25. Vorrichtung nach Anspruch 24, **dadurch gekennzeichnet, dass** der Schwellwert zylinderindividuell vorgebbar ist.

26. Vorrichtung nach einem der Ansprüche 14 bis 25, **dadurch gekennzeichnet, dass** im Mikroprozessor Mittel vorgesehen sind, so dass der Grundzündwinkel aus einem lastund/oder drehzahlabhängignen Kennfeld lesbar ist und bei Überschreitung des vorgebbaren Schwellwerts der Grundzündwinkel aus einem sich von den übrigen Betriebsarten unterscheidenden last- oder drehzahlabhängigen Kennfeld lesbar ist.

## Claims

1. Method for operating an internal combustion engine, in which, in at least one cylinder, combustion of a fuel which is introduced into the cylinder takes place in a fuel/air mixture, in which case, when knocking occurs, a base ignition angle in the at least one cylinder is incrementally adjusted in the retarded direction from the basic ignition angle to an adjustment angle by means of a knocking controller, **characterized in that**, when the adjustment angle exceeds a predefinable threshold value,
a) at least one additional measure which reduces the tendency of the fuel/air mixture to knock is taken and
b) the adjustment angle is reduced so that the base ignition angle is adjusted in the early direction.

2. Method according to Claim 1, **characterized in that** the additional measure which reduces the tendency to knock of an internal combustion engine which injects petrol directly includes the fact that two fuel injection processes are carried out in one working cycle.

3. Method according to Claim 2, **characterized in that** the quantity of fuel which is to be injected is divided between the two injection processes.

4. Method according to one of Claims 1 to 3, **characterized in that** the additional measure which reduces the tendency to knock includes the fact that the rate of exhaust gas which is fed back is increased.

5. Method according to one of Claims 2 to 4, **characterized in that**, when the predefinable threshold value is exceeded, the additional measure of double injection is carried out only above a predefinable first load threshold value, or the additional measure of feeding back exhaust gas is carried out only below a third load threshold value.

6. Method according to Claim 5, **characterized in that**, after a predefinable second load threshold value for the additional measure of double injection has been undershot or after a predefinable fourth load threshold value for the additional measure of feeding back exhaust gas has been exceeded, the internal combustion engine continues to be operated with a different operating mode, the second load threshold value being lower than the first load threshold value, and the fourth load threshold value being higher than the third load threshold value.

7. Method according to one of Claims 5 or 6, **characterized in that** the first load threshold value and/or the second load threshold value and/or the third load threshold value and/or the fourth load threshold value are dependent on the rotational speed.

8. Method according to one of Claims 1 to 7, **characterized in that**, when the predefinable threshold value is exceeded, the adjustment angle is reduced rapidly, the more rapid reduction being carried out by means of a relatively large increment and/or by means of a relatively high frequency of the reduction steps.

9. Method according to one of Claims 1 to 8, **characterized in that** the mean value of the cylinder-specific retarded-adjustment angle of all the cylinders is used as an adjustment angle.

10. Method according to Claim 9, **characterized in that** the threshold value is predefined with the same value for all the cylinders.

11. Method according to one of Claims 1 to 8, **characterized in that** the adjustment angle of the respective current cylinder is used as adjustment angle.

12. Method according to Claim 11, **characterized in that** the threshold value is predefined on a cylinder-specific basis.

13. Method according to one of Claims 1 to 12, **characterized in that** the basic ignition angle is read from a load-dependent and/or rotational-speed-dependent characteristic diagram, and when the predefinable threshold value is exceeded the basic ignition angle is read from a load-dependent and/or rotational-speed-dependent characteristic diagram which differs from the other operating modes.

14. Device for operating an internal combustion engine having at least one cylinder in which combustion of the fuel which is introduced into the at least one cylinder takes place in a fuel/air mixture, a microprocessor being provided which includes a knocking controller so that when knocking occurs a base ignition angle in the at least one cylinder can be adjusted incrementally in the retarded direction from the basic ignition angle to an adjustment angle, **characterized in that**, when the adjustment angle exceeds a predefinable threshold value, means are provided in the microprocessor so that
a) an additional measure which reduces the tendency of the fuel/air mixture to knock can be taken, and
b) the adjustment angle can be reduced so that the base ignition angle can be adjusted in the early direction.

15. Device according to Claim 14, **characterized in that** means are provided for an internal combustion engine which injects petrol directly so that two fuel injection processes can be carried out in one working cycle as an additional measure which reduces the tendency to knock.

16. Device according to Claim 15, **characterized in that** means are provided in the microprocessor so that the quantity of the fuel which is to be injected can be divided between the two injection processes.

17. Device according to one of Claims 14 to 16, **characterized in that** means are provided so that the rate of the exhaust gas which is fed back can be increased as an additional measure which reduces the tendency to knock.

18. Device according to one of Claims 15 to 17, **characterized in that** means are provided in the microprocessor so that when the predefinable threshold value is exceeded the additional measure of double injection can be carried out only above a predefinable first load threshold value, and/or when the predefinable threshold value is exceeded the additional measure of knocking protection with feeding back of exhaust gases can be carried out only below a predefinable third load threshold value.

19. Device according to Claim 18, **characterized in that** means are provided in the microprocessor so that after a predefinable second load threshold value for the additional measure of double injection has been undershot and/or after a predefinable fourth load threshold value for the additional measure of feeding back exhaust gas has been exceeded, the internal combustion engine can continue to be operated with a different operating mode, the second load threshold value being lower than the first load threshold value, and the fourth load threshold value being higher than the third load threshold value.

20. Device according to one of Claims 18 or 19, **characterized in that** the first load threshold value and/or the second load threshold value and/or the third load threshold value and/or the fourth load threshold value are dependent on the rotational speed.

21. Device according to one of Claims 14 to 20, **characterized in that** means are provided so that when the predefinable threshold value is exceeded, the adjustment angle can be reduced rapidly, it being possible to carry out the more rapid reduction by means of a relatively large increment and/or by means of a relatively high frequency of the reduction steps.

22. Device according to one of Claims 14 to 21, **characterized in that** means are provided in the microprocessor so that the mean value of the cylinder-specific adjustments of all the cylinders in the retarded direction can be used as adjustment angle.

23. Device according to Claim 22, **characterized in that** the threshold value can be predefined with the same value for all the cylinders.

24. Device according to one of Claims 14 to 21, **characterized in that** means are provided in the microprocessor so that the adjustment angle of the respective current cylinder can be used as adjustment angle.

25. Device according to Claim 24, **characterized in that** the threshold value can be predefined on a cylinder-specific basis.

26. Device according to one of Claims 14 to 25, **characterized in that** means are provided in the microprocessor so that the basic ignition angle can be read from a load-dependent and/or rotational-speed-dependent characteristic diagram, and when the predefinable threshold value is exceeded the basic ignition angle can be read from a load-dependent or rotational-speed-dependent characteristic diagram which differs from the other operating modes.

## Revendications

1. Procédé de gestion d'un moteur à combustion interne selon lequel, dans au moins un cylindre, il y a combustion d'un mélange carburant/air introduit dans le cylindre et, lorsque se produit du cliquetis, à l'aide d'une régulation de cliquetis, on règle dans le sens du retard, un angle d'allumage de base dans au moins un cylindre en procédant par étape en partant de l'angle d'allumage de base vers l'angle de réglage,
**caractérisé en ce que**
si l'angle de réglage dépasse un seuil prédéterminé
a) on prend au moins une mesure complémentaire réduisant la tendance au cliquetis du mélange carburant/air et
b) on diminue l'angle de réglage pour déplacer l'angle d'allumage de base dans le sens de l'avance.

2. Procédé selon la revendication 1,
**caractérisé en ce que**
la mesure complémentaire réduisant la tendance au cliquetis comporte, dans le cas d'un moteur à combustion interne à injection directe d'essence, l'exécution de deux opérations d'injection de carburant dans un cycle de travail.

3. Procédé selon la revendication 2,
**caractérisé en ce qu'**
on répartit la dose de carburant à injecter entre les deux opérations d'injection.

4. Procédé selon l'une quelconque des revendications 1 à 3,
**caractérisé en ce que**
la mesure supplémentaire de réduction de la tendance au cliquetis englobe également l'augmentation du taux de réintroduction des gaz d'échappement.

5. Procédé selon l'une quelconque des revendications 2 à 4,
**caractérisé en ce qu'**
en cas de dépassement du seuil prédéterminé, la mesure complémentaire de la double injection n'est effectuée qu'au-dessus d'un premier seuil de charge prédéterminé ou encore la mesure complémentaire de réintroduction des gaz d'échappement n'est exécutée qu'en dessous d'un troisième seuil de charge.

6. Procédé selon la revendication 5,
**caractérisé en ce qu'**
après dépassement vers le bas d'un second seuil de charge prédéterminé pour la mesure complémentaire de double injection ou après dépassement vers le haut d'un quatrième seuil de charge, prédéterminé, pour la mesure complémentaire de réintroduction des gaz d'échappement, on continue de faire fonctionner le moteur à combustion interne selon un autre mode de fonctionnement, et le second seuil de charge est inférieur au premier seuil de charge alors que le quatrième seuil de charge est supérieur au troisième seuil de charge.

7. Procédé selon l'une quelconque des revendications 5 ou 6,
**caractérisé en ce que**
le premier seuil de charge et/ou le second seuil de charge et/ou le troisième seuil de charge et/ou le quatrième seuil de charge dépendent de la vitesse de rotation.

8. Procédé selon quelconque des revendications 1 à 7,
**caractérisé en ce qu'**
en cas de dépassement du seuil prédéterminé, on diminue rapidement l'angle de réglage et cette diminution plus rapide s'obtient par une plus grande largeur de pas et/ou une fréquence plus élevée des pas de réduction.

9. Procédé selon l'une quelconque des revendications 1 à 8,
**caractérisé en ce que**
comme angle de réglage, on prend la valeur moyenne des angles de réglage dans le sens du retard individuel à chaque cylindre pour tous les cylindres.

10. Procédé selon la revendication 9,
**caractérisé en ce que**
le seuil pour tous les cylindres a la même valeur prédéterminée.

11. Procédé selon l'une quelconque des revendications 1 à 8,
**caractérisé en ce que**
comme angle de réglage, on utilise l'angle de réglage du cylindre respectivement en cours.

12. Procédé selon la revendication 11,
**caractérisé en ce qu'**
on prédéfinit le seuil d'une manière individuelle pour chaque cylindre.

13. Procédé selon l'une quelconque des revendications 1 à 12,
**caractérisé en ce qu'**
on extrait l'angle d'allumage de base d'un champ de caractéristiques dépendant de la charge et/ou de la vitesse de rotation et, en cas de dépassement du seuil prédéterminé, on extrait l'angle d'allumage de base d'un champ de caractéristiques d'autres modes de fonctionnement dépendant de la charge et/ou de la vitesse de rotation.

14. Dispositif de gestion d'un moteur à combustion interne ayant au moins un cylindre dans lequel se produit la combustion du mélange carburant/air formé par le carburant introduit dans au moins un cylindre, et un microprocesseur est prévu avec une régulation de cliquetis qui en présence de cliquetis, règle l'angle d'allumage de base d'au moins l'un des cylindres, par étapes jusqu'à l'angle de réglage de l'angle d'allumage de base, dans le sens du retard,
**caractérisé en ce que**
si l'angle de réglage dépasse un seuil prédéterminé, le microprocesseur comporte des moyens pour
a) prendre une mesure complémentaire révisant la tendance au cliquetis du mélange carburant/air et
b) diminuer l'angle de réglage pour régler l'angle d'allumage de base dans le sens de l'avance.

15. Dispositif selon la revendication 14,
**caractérisé en ce que**
pour un moteur à combustion interne à injection directe d'essence, la mesure complémentaire pour réduire la tendance au cliquetis consiste à prévoir deux opérations d'injection de carburant au cours d'un même cycle de travail.

16. Dispositif selon la revendication 15,
**caractérisé en ce que**
le microprocesseur comporte des moyens pour répartir la quantité de carburant à injecter entre les deux opérations d'injection.

17. Dispositif selon l'une quelconque des revendications 14 à 16,
**caractérisé par**
des moyens permettant, comme mesure de réduction de la tendance au cliquetis, d'augmenter le taux de gaz d'échappement à réintroduire.

18. Dispositif selon l'une quelconque des revendications 15 à 17,
**caractérisé en ce que**
le microprocesseur comporte des moyens pour que, en cas de dépassement du seuil prédéterminé, la mesure complémentaire de double injection ne soit exécutée qu'au-dessus d'un premier seuil de charge prédéfini et/ou, en cas de dépassement du seuil prédéfini, la mesure complémentaire de protection contre le cliquetis avec réintroduction des gaz d'échappement ne soit exécutée qu'en dessous d'un troisième seuil de charge prédéfini.

19. Dispositif selon la revendication 18,
**caractérisé en ce que**
le microprocesseur comporte des moyens pour qu'après dépassement vers le bas d'un second seuil de charge prédéfini, pour la mesure complémentaire de double injection et/ou après dépassement d'un quatrième seuil de charge prédéfini pour la mesure complémentaire de réintroduction des gaz d'échappement, on continue de faire fonctionner le moteur à combustion interne avec un autre mode de fonctionnement selon lequel le second seuil de charge est inférieur au premier seuil de charge et le quatrième seuil de charge est supérieur au troisième seuil de charge.

20. Dispositif selon l'une quelconque des revendications 18 ou 19,
**caractérisé en ce que**
le premier seuil de charge et/ou le second seuil de charge et/ou le troisième de charge et/ou le quatrième seuil de charge dépendent de la vitesse de rotation.

21. Dispositif selon l'une quelconque des revendications 14 à 20,
**caractérisé par**
des moyens pour que, en cas de dépassement du seuil prédéterminé, l'angle de réglage puisse être diminué rapidement et cette diminution plus rapide se réalise par des dimensions de pas plus grandes et/ou par une fréquence plus élevée des pas réducteurs.

22. Dispositif selon l'une quelconque des revendications 14 à 21,
**caractérisé en ce que**
le microprocesseur des moyens pour utiliser, comme angle de réglage, la valeur moyenne des réglages dans le sens du retard de tous les cylindres, d'une manière individuelle par cylindre.

23. Dispositif selon la revendication 22,
**caractérisé en ce que**
le seuil pour tous les cylindres est prédéfini à la même valeur.

24. Dispositif selon l'une quelconque des revendications 14 à 21,
**caractérisé en ce que**
le microprocesseur comporte des moyens pour utiliser, comme angle de réglage, celui du cylindre actuel respectif.

25. Dispositif selon la revendication 24,
**caractérisé en ce que**
le seuil est prédéfini de manière individuelle par cylindres.

26. Dispositif selon l'une quelconque des revendications 14 à 25,
**caractérisé en ce que**
le microprocesseur comporte des moyens pour que l'angle d'allumage de base puisse être extrait d'un champ de caractéristiques de charge et/ou dépendant de la vitesse de rotation et, en cas de dépassement du seuil prédéfini, l'angle d'allumage de base est extrait d'un champ de caractéristiques correspondant à d'autres modes de fonctionnement, différents et dépendant de la charge ou de la vitesse de rotation.
